# EUROPÄISCHE PATENTSCHRIFT

(11) **EP 2 721 697 B1**
(45) Veröffentlichungstag und Bekanntmachung des Hinweises auf die Patenterteilung: **27.12.2017**
(21) Anmeldenummer: 12720501.1
(22) Anmeldetag: 11.05.2012
(51) Int. Cl.: H01R 13/447, H01R 13/52, H02G 3/14

(54) **VORRICHTUNG MIT EINEM KLAPPDECKEL UND MINDESTENS EINEM FLEXIBLEN ELEMENT**
DEVICE HAVING A HINGED COVER AND AT LEAST ONE FLEXIBLE ELEMENT
DISPOSITIF POURVU D'UN COUVERCLE RABATTABLE ET D'AU MOINS UN ÉLÉMENT FLEXIBLE

(30) Priorität: 16.06.2011 DE 102011051107; 09.03.2012 DE 202012100856 U
(43) Veröffentlichungstag der Anmeldung: 23.04.2014
(73) Patentinhaber: Hachadorian Design & Calculation Gmbh, 60311 Frankfurt am Main (DE)
(72) Erfinder: HACHADORIAN, Gary, 60311 Frankfurt am Main (DE)
(74) Vertreter: Fuchs Patentanwälte Partnerschaft mbB
(86) Internationale Anmeldenummer: PCT/EP2012/058777
(87) Internationale Veröffentlichungsnummer: WO 2012/171733

(56) Entgegenhaltungen:
- WO-A1-95/28757
- WO-A1-2010/060432
- DE-U1- 7 600 675
- DE-U1- 8 800 544
- US-A- 4 036 396
- US-A- 5 501 607
- US-A- 5 747 739
- US-A- 6 021 606

## Beschreibung

Die vorliegende Erfindung betrifft eine Vorrichtung, die einen Klappdeckel, der aus einer geschlossenen Endstellung heraus um eine Rotationsachse in eine offene Endstellung schwenkbar ist, sowie ein flexibles Element, welches mit einer Kraft entlang einer Federwirklinie an dem Klappdeckel angreift, aufweist. Das flexible Element wird in mindestens einer Endstellung des Klappdeckels axial belastet und in mindestens einer weiteren Position mit Querkräften in Biegung oder Dehnung belastet. Die Federwirklinie liegt im Wesentlichen auf der Rotationsachse des Klappdeckels in geöffneter Stellung des Klappdeckels an, so dass der Klappdeckel in offener Endstellung einen stabilen selbsthaltenden Zustand erreicht, oder die Federwirklinie überschneidet sich in offener Stellung des Klappdeckels mit der Rotationsachse des
Klappdeckels, so dass der Klappdeckel in geöffneter Endstellung einen stabilen selbsthaltenden Zustand erreicht. Ebenfalls Bestandteil der Erfindung ist eine Steckdose, die durch einen Feder-Klappdeckel abgedeckt wird und diese erfindungsgemäße Vorrichtung aufweist. Die vorliegende Erfindung findet vorzugsweise aber nicht ausschließlich Verwendung bei elektrischen Steckdosen, die zum Schutz vor äußeren Einflüssen über einen Feder-Klappdeckel verfügen.
Für den Schutz von elektrischen Steckdosen werden häufig selbstschließende Feder-Klappdeckel eingesetzt. Insbesondere Fahrzeuge, wie beispielsweise Lieferwagen, können mit einer derartigen Steckdose versehen sein, deren Einsetzöffnung zur Außenseite des Fahrzeugs für den Zweck des Zuführens von Energie zu einem zu ziehenden Fahrzeug oder unter einer Verwendung eines Elektromotors außerhalb des Fahrzeugs freiliegt. In einer solchen Steckdose ist ein selbstschließender Feder-Klappdeckel vorgesehen, um zu verhindern, dass Wasser und Staub in die Einsetzöffnung eintreten können. Die Verwendung einer Feder in einer solchen Fahrzeugsteckdosen-Abdeckung beaufschlagt den Klappdeckel in einer Schließrichtung mit einer Kraft, welche die Einsetzöffnung sicher verschließt, wenn die Steckdose nicht verwendet wird.

In der DE 38 09 289 A1 ist zum Beispiel eine Steckdose einer Steckverbindung für den elektrischen Anschluss von Kraftfahrzeuganhängern beschrieben, mit einem sich bei nicht eingestecktem Stecker selbsttätig unter der Wirkung einer Feder an das Dosengehäuse anlegenden Klappdeckel, wobei die Feder mit einem freien Schenkel in den mittigen Bereich des Klappdeckels eingreift.

Bei der Verwendung von Schraubenfedern, ist die Kraft, die auf einen Klappdeckel wirkt größer, wenn der Klappdeckel geöffnet ist und geringer, wenn der Klappdeckel geschlossen ist. Wenn eine solche Vorrichtung im Freien verwendet wird, ist eine beaufschlagende bzw. Vorspannkraft der Feder sehr stark eingestellt, damit der Klappdeckel in der verschlossenen Position gehalten wird, um sich nicht in einer Öffnungsrichtung durch Einspritzdruck von Hochdruck-Waschwasser oder einer Vibration während des Fahrens zu bewegen. Die maximale Vorspannkraft der Feder ist jedoch durch das Verletzungsrisiko des Benutzers eingeschränkt.

Um dieses Problem zu umgehen, wird in der DE 10 2004 056 009 A1 eine Fahrzeugsteckdosen-Abdeckung vorgeschlagen, bei der Torsionsschraubenfedern Kräfte auf die Abdeckung ausüben und Gleitkontakte zum Dämpfen der beaufschlagenden Kräfte ausgebildet sind. Dafür sind der Klappdeckel und ein Abdeckungshauptkörper mit Gleitkontaktabschnitten ausgebildet, indem sie in gleitenden bzw. Gleitkontakt miteinander, unmittelbar bevor der Klappdeckel eine Klappdeckelschließposition erreicht, in einem Verlagerungsweg des Klappdeckels von einer Klappdeckelöffnungsposition zu der Klappdeckelschließposition gebracht werden. Hierbei wird jedoch ein vergleichsweise komplizierter Aufbau vorgeschlagen.

Ebenfalls ist DE 18 80 788 U aus dem Stand der Technik bekannt. Diese zeigt eine mit einem Klappdeckel versehene Abdeckplatte, die insbesondere für Steckdosen verwendet wird, um diese gegen Feuchtigkeit zu schützen und gleichzeitig unauffällig und zuverlässig an der Abdeckplatte befestigen zu können. Wobei die Abdeckplatte rechteckig ausgebildet ist und eine als Schraubenfeder ausgebildete Schließfeder lösbar mithilfe von eingesetzten Stiften an der Abdeckplatte und im Klappdeckel gehalten wird. Nachteilig hierbei ist, dass der so geartete Klappdeckel keine definierte geöffnete Position besitzt und sich die schraubenförmige Feder beim einer entsprechenden Position überdehnen würde und verformt werden würde.

Aus der DE 76 00 675 U ist eine Steckerkupplung mit verriegelbarem Dosendeckel und verriegelbarem Kupplungszustand bekannt. Konkret offenbart dieser Stand der Technik eine Steckerkupplung, die mit einem schließbaren einfachen Verriegelungssystem versehen ist, um mit ein und demselben Schlüssel und unter Ausnutzung eines Schloßmechanismusses sowohl im entkuppelten Zustand den Dosendeckel zu verriegeln und im gekoppelten Zustand ein Lösen der Steckverbindung zu vermeiden und beide Funktionen unter Verwendung eines gegen eine erste Feder schwenkbaren Verriegelungskörpers aufzuheben. Die DE 76 00 675 U zeigt also eine Vorrichtung mit einen speziellen Schlüssel, welcher einen Dosendeckel betätigen kann.

Ebenfalls dem Stand der Technik zuzuordnen ist das Dokument DE 11 41 714 A, welches eine rohrförmige Wandleuchte mit einer an der Stirnwand angebrachten, durch einen Klappdeckel verschlossenen Steckdose beschreibt. Der wesentliche Nachteil dieser Erfindung ist, dass hier der Deckel nicht so fixierbar ist, dass dieser ohne Hilfsmittel in der geöffneten Stellung verharrt, ohne das Federelement zu beschädigen.

Die US 40 36 396 A beschreibt einen Verteilerkasten dessen Deckel mit einer Schraubenfeder verbunden ist und eine bohnenförmige Aussparung für die Rotationsachse R ausweist, um dort offensichtlich durch eine entsprechende Bedienung des Deckels ein Fixieren des Deckels zu ermöglichen. Hierbei ist aufgrund der bohnenförmigen Aussparung für die Rotationsachse der Deckel in der Rotationsachse manuell fixierbar, was nachteilig zu einem manuellen Lösen der Fixierung des Deckes führt. Der Benutzer muss also den mithilfe der bohnenförmigen Aussparung fixierten Deckel abermals manuell so verändern, dass die Rotationsachse des Deckels wieder frei rotierbar ist. Nachteilig hierbei erweist sich, dass es keine Möglichkeit gibt, den Deckel ohne manuellen Eingriff so auszuführen, dass er in geöffneter Stellung fixierbar ist.

Weiter aus dem Stand der Technik bekannt ist DE 88 00 544 U1, demnach eine mit einem Klappdeckel versehene Abdeckplatte offenbart wird, die insbesondere eine Steckdose vor Feuchtigkeit schützt und dies über eine auf den Deckel einwirkende Schließfeder bewerkstelligt.

Hier zeigt sich grundsätzlich bei allen aus dem Stand der Technik bekannten Vorrichtungen, dass die Feder nicht begrenzt ist und bei unsachgemäßer Verwendung diese Feder verformt werden würden. Weiter ist nachteilig zu sehen, dass die aus dem Stand der Technik bekannten Vorrichtungen meist lediglich zum Schließen eines Klappdeckels verwendet werden können. Ein Fixieren in einer geöffneten Klappdeckelposition ist nicht erkennbar, bzw. wird dieses Fixieren der geöffneten Klappdeckelposition nur so erreicht, dass der Benutzer beispielsweise die Rotationsachse aushängen muss, wie beispielsweise durch die bohnenförmigen Aussparung bereits beschrieben.

Durch besondere Gestaltung (veränderlicher Windungsdurchmesser, Gummiformkörper, Luftfedern) lassen sich Federn herstellen, deren Kraft/Weg-Zusammenhang nicht linear ist. Die Verwendung von nicht-linearen Federn hat den Vorteil, dass sich die Federkonstante in Abhängigkeit von der Verformung der Feder ändert. Federn zur Stoßdämpfung besitzen oft ein Progressiv-Verhalten, was bedeutet dass die Federkraft überproportional mit dem Weg zu nimmt. Dadurch wird beispielsweise ein Durchschlagen der Feder vermieden und ein schnelles Abklingen von Schwingungen beschleunigt. Dies ist besonders im Fahrzeugbau erwünscht. Diese Kennlinie weisen unter Anderem geschichtete Blattfedern und kegelige Schraubendruckfedern auf. Federn mit einer degressiven Federkennlinie werden mit jeweils steigender Last weicher. Dies ist erwünscht, wenn nach einer bestimmten Belastung ein weiterer größerer Federweg bei kleinerem Kraftanstieg benötigt wird. Degressive Federn sind beispielsweise Gummifedern oder zugbelastete Federn.
Aufgabe der vorliegenden Erfindung war es, eine einfach konstruierte Feder zur Verwendung in einem Feder-Klappdeckel vorzuschlagen, die eine große Federkraft auf den Klappdeckel im geschlossenen Zustand ausübt und eine geringere, wenn sich der Klappdeckel in einer geöffneten Position befindet. Der Klappdeckel soll in geöffneter Stellung möglichst einfach fixierbar sein und die Feder soll nicht in Mitleidenschaft gezogen werden. Der Klappdeckel soll überdies in geöffneter Stellung mit möglichst wenig Kraftaufwand geschlossen werden.

Die gestellte Aufgabe wird gelöst durch eine Vorrichtung gemäss Anspruch 1, die einen Klappdeckel, der aus einer geschlossenen Endstellung heraus um eine Rotationsachse in eine offene Endstellung schwenkbar ist, sowie ein flexibles Element, welches mit einer Kraft entlang einer Federwirklinie an dem Klappdeckel angreift, aufweist. Das flexible Element wird in mindestens einer Endstellung des Klappdeckels axial belastet und in mindestens einer weiteren Position mit Querkräften in Biegung oder Dehnung belastet. Die Federwirklinie überschneidet sich in offener Stellung des Klappdeckels mit der Rotationsachse des Klappdeckels, so dass der Klappdeckel in offener Endstellung fixierbar ist. Um das flexible Element, welches als Blattfeder ausgeführt ist, nicht zu beschädigen, wurde ein Anschlag so positioniert, dass die Bewegung der Blattfeder durch diesen Anschlag so begrenzt ist, dass der Umschlagspunkt der Blattfeder nicht überschritten wird. Überdies ist der Anschlag vorzugsweise so ausgestaltet, dass er die Bewegung des Deckels um die Rotationsachse so eingrenzt, dass entweder genau die Stellung erreicht ist, in der sich die Federwirklinie und die Rotationsachse auf einer Linie befinden, oder diese Position minimal überschritten wird. Diese Unterscheidung ist nötig, da beispielsweise aufgrund von Materialeigenschaften das Eigengewicht und somit die Gewichtskraft des Deckels bzw. die Kenndaten des Federelements variieren können und so dennoch ein stabiler selbsthaltender Zustand erreicht wird. Zudem sollten die Masse des Deckels bzw. die daraus resultierende Gewichtskraft an die Federkonstante des Federelements angepasst werden. Eine weitere Anpassungsmöglichkeit der Feder, welche speziell bei Blattfedern verwendet werden kann, wird durch ein Sicken der Feder erreicht. Hier kann mit der Sickung ebenfalls auf das Knickverhalten und die Steifigkeit der Feder Einfluss genommen werden.

Wenn sich die Federwirklinie in geöffneter Stellung des Klappdeckels der Rotationsachse des Klappdeckels annähert, ist das Drehmoment, durch welches das flexible Element am Klappdeckel angreift nicht ausreichend, um den Reibungswiderstand gegen die Bewegung des Klappdeckels zu überwinden. Somit bewegt sich der Klappdeckel in offener Endstellung nicht. Diese Stellung kann dadurch erreicht werden, dass der Anschlagpunkt beim Öffnen des Klappdeckels so ausgestaltet ist, dass die Rotationsachse des Klappdeckels und die Federwirklinie im Wesentlichen auf einer Linie liegt. Dadurch kann sichergestellt werden, dass lediglich ein minimaler Kraftaufwand nötig ist, um diese in den geschlossenen Zustand überzuführen. Wirkt nun diese minimale Kraft, wird die Position, in der im Wesentlichen die Rotationsachse des Deckels auf der Federwirklinie liegen, durch die Eigengewichtskraft des Deckels in die geschlossene Deckelstellung gebracht. Hierbei spielt das Federelement eine maßgebliche Rolle, da der Deckel aus der vollständig geöffneten Stellung bewegt wird und somit die Federkraft des Federelements wieder einsetzt. Diese Federkraft ist in jener Stellung, in der die Rotationsachse und die Federwirklinie übereinstimmen, in Hinblick auf die Lageänderung des Deckels zu vernachlässigen, da diese dort genau an der Rotationsachse angreift. Bei einer Abweichung dieser Lage in Richtung der geschlossenen Deckelstellung greift diese Kraft aber wieder an und schließt den Deckel selbstständig.

Die Reihenfolge der Federelementenden und der Rotationsachse R spielt hierbei keine Rolle, vielmehr ist es wesentlich, dass sich alle drei Punkte, also die zwei Federelementenden und die Rotationsachse R auf einer gemeinsamen Achse befinden. Dadurch kann beispielsweise sowohl eine Zug-, als auch eine Druckfeder als Federelement verwendet werden. Es ist auch möglich, das Federelement so auszuführen, dass Kombinationen aus verschiedenen Federelementen verwendet werden.

Um zu verhindern, dass beispielsweise Biegungsmomente auf das Federelement wirken, und um die Funktionsfähigkeit der Vorrichtung zu verbessern, ist bei einer bevorzugten Ausgestaltungsform mindestens ein Ende des flexiblen Elements drehgelagert. Wenn beide Enden der Feder als Drehgelenk ausgebildet sind, wirkt die Federkraft entlang einer Linie (Federwirklinie) zwischen den zwei Einspannstellen des flexiblen Elements.

Wenn sich diese Federkraft mit der Rotationsachse des Klappdeckels überschneidet oder im Wesentlichen darauf liegt, wirkt die Federkraft derart, dass der Klappdeckel in der offenen Position gehalten wird.

Hierbei ist es besonders vorteilhaft, wenn eine Einspannstelle des flexiblen Elements am Gehäuse der Vorrichtung vorgesehen ist und die zweite Einspannstelle des Federelements am Klappdeckel vorgesehen ist und exzentrisch zur Rotationsachse des Klappdeckels angeordnet ist.

Ein Vorteil der vorliegenden Erfindung ist zunächst eine große Federkraft, die auf die Dichtung des Klappdeckels wirkt, ohne dass diese Federkraft eine Verletzungsgefahr für den Nutzer darstellt. Gleichzeitig wird das Dichtungsmaterial nicht überbelastet, da die Endposition des Klappdeckels festgelegt ist und dieser nicht mit sehr großer Kraft auf das Gehäuse und die Dichtung gepresst wird. Außerdem kann der Klappdeckel durch die Federkraft in offener Stellung gehalten werden, so dass eine einhändige Bedienung von beispielsweise einer Steckdose ermöglicht wird. Dennoch kann der Klappdeckel durch eine geringe Krafteinwirkung von außen sehr einfach geschlossen werden, sodass der Schutz der beherbergten Kontakt vor Witterung, Schmutz und anderen äußeren Einflüssen geschützt ist.

In einer weiteren bevorzugten Ausgestaltungsform weist die Vorrichtung einen Anschlag für das flexible Element auf, welcher als Lasche ausgebildet ist und die Bewegung des flexiblen Elements so begrenzt, dass der Umschlagspunkt der Feder nicht erreicht wird. Dadurch wird sichergestellt, dass sich das flexible Element lediglich in eine Richtung verformen kann. Je nachdem, wie viel Kraft der Anschlag auf das flexible Element ausübt, kann dieser dafür sorgen, dass eine Öffnung des Klappdeckels ohne weitere Entriegelung nicht möglich ist. Dies ist der Fall, wenn das flexible Element über den Umschlagspunkt heraus entspannt ist. Alternativ kann dieser Anschlag so ausgebildet sein, dass dieser eine gewisse Kraft auf das flexible Element ausübt, so dass das flexible Element leicht verformt wird und es möglich ist, den Klappdeckel ohne Entriegelung zu öffnen.

In einer alternativen Ausgestaltungsform ist ein zusätzliches Entriegelungselement vorgesehen, wobei das Entriegelungselement an dem flexiblen Element angreift, so dass dieses aus dem axial belasteten Zustand heraus biegbar ist. Hierbei ist es bevorzugt, wenn das Entriegelungselement mit dem Klappdeckel verbunden ist. In einer alternativen Ausgestaltungsform ist das Entriegelungselement am fixierten Gehäuse befestigt.

In einer weiteren bevorzugten Ausführungsform weist das Entriegelungselement einen Entriegelungshebel auf, über welchen das Entriegelungselement bewegt werden kann. Weiter ist von Vorteil, wenn das Entriegelungselement mittels eines Drehgelenks mit dem Klappdeckel verbunden ist. Es ist zudem bevorzugt, wenn zusätzlich ein Anschlag am Klappdeckel vorhanden ist. Dies hat zur Folge dass bei Betätigung des Entriegelungshebels, die auf diesen Hebel wirkende Kraft auf den Klappdeckel übertragen wird und nach Entriegelung der Vorrichtung der Klappdeckel geöffnet werden kann.

In einer weiteren vorteilhaften Ausgestaltungsform der Erfindung wird der Belastungszustand des flexiblen Elements durch das Einstecken eines weiteren Bauteils verändert, so dass der Klappdeckel durch die Federkraft des flexiblen Elements schließbar ist. Diese Ausführungsform ist besonders bevorzugt, wenn die Vorrichtung in einer Steckdose mit einem Feder-Klappdeckel vorgesehen ist. Bei dem weiteren Bauteil handelt es sich dann vorzugsweise um einen elektrischen Stecker, welcher in eine Steckdose eingeführt wird. Dies ist besonders vorteilhaft, da sich der Klappdeckel bei eingeführtem Stecker selbstständig soweit schließt, wie es möglich ist und den Stecker somit vor äußeren Einflüssen schützt. Diese Ausführungsform hat ebenfalls den Vorteil, dass sich beim Herausziehen des Steckers der Klappdeckel automatisch schließt, so dass hierfür kein zusätzlicher Handgriff notwendig ist.

In einer alternativen Ausführungsform der erfindungsgemäßen Vorrichtung kontaktiert ein Teil des Klappdeckels in offener Endstellung ein weiteres Gehäuseteil, so dass ein Reibungswiderstand in offener Endstellung erzeugt wird oder der Klappdeckel in die offene Endstellung einrastbar ist.

Bei einer weiteren vorteilhaften Ausführungsform greift das flexible Element über ein zusätzliches Bauteil an dem Klappdeckel an. Das zusätzliche Bauteil beaufschlagt den Klappdeckel in geschlossener Endstellung mit einer Kraft in Schließrichtung. Dies hat den Vorteil, dass das flexible Element vom Klappdeckel entkoppelt werden kann. Bei dem zusätzlichen Bauteil handelt es sich vorzugsweise um einen Verriegelungshebel. Bei dem eingesteckten weiteren Bauteil handelt es sich vorzugsweise um einen Stecker, der in eine Steckdose eingesteckt wird. In dieser vorteilhaften Ausgestaltungsform kann der Verriegelungshebel den eingesteckten Stecker kontaktieren und diesen mit einer zusätzlichen Haltekraft beaufschlagen. Somit wird eine zusätzliche Sicherung des eingesteckten Steckers gewährleistet. Eine solche Vorrichtung kann vorzugsweise bei elektrischen Schnittstellen zwischen Fahrzeugen und Arbeitsgeräten bei landwirtschaftlichen Arbeits- beziehungsweise Anbaugeräten eingesetzt werden (Steckdosen der ISO 11783-2 Norm).

In einer weiteren vorteilhaften Ausführungsform wird durch den Anschlag die Bewegung um die Rotationsachse in eine Richtung begrenzt. Dieser Anschlag kann vorzugsweise so ausgestaltet sein, dass er die Bewegung des Deckels um die Rotationsachse R so eingrenzt, dass entweder genau die Stellung erreicht ist, in der sich die Federwirklinie F und die Rotationsachse R auf einer Linie befinden, oder diese Position minimal überschritten wird. Zudem sollten hier im speziellen die Masse des Deckels bzw. die daraus resultierende Gewichtskraft an die Federkonstante des Federelements angepasst werden.

Ebenfalls Bestandteil der vorliegenden Erfindung ist eine Steckdose, die durch einen Feder-Klappdeckel abgedeckt wird und eine erfindungsgemäße Vorrichtung aufweist. In einer bevorzugten Ausgestaltungsform handelt es sich bei der Steckdose um eine Anhänger-Steckdose. Eine solche Steckdose ist häufig bei PKW oder Lieferwagen vorzufinden, deren Einsetzöffnung zur Außenseite des Fahrzeugs für den Zweck des Zuführens von Energie zu einem zu ziehenden Fahrzeug oder zur Verwendung eines Elektromotors außerhalb des Fahrzeugs vorgesehen ist.

Im Folgenden soll die Erfindung anhand von Zeichnungen näher erläutert werden, wobei sich die Erfindung selbstverständlich nicht auf die dargestellten Ausgestaltungen beschränkt. Dabei zeigen:

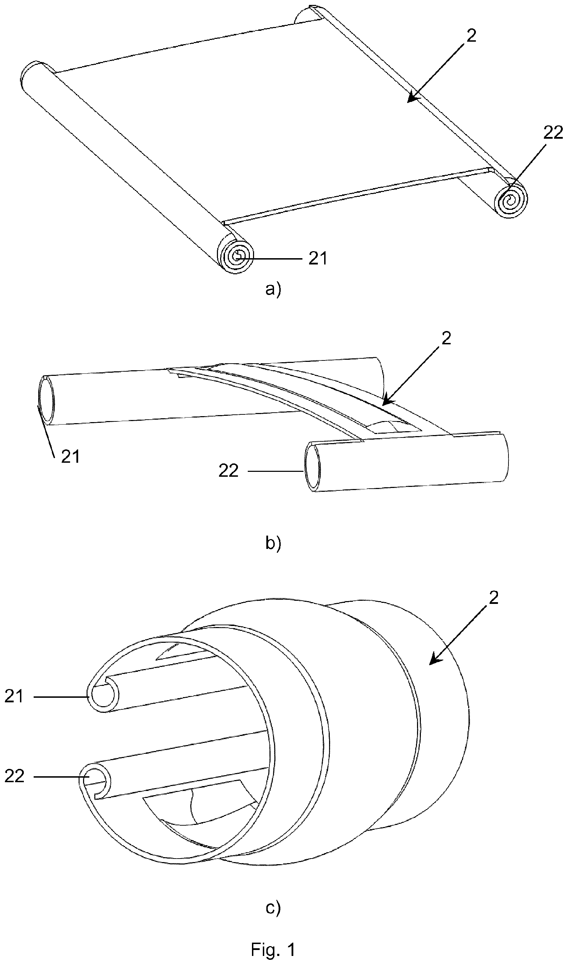

- Fig. 1: eine erste Ausführungsform der erfindungsgemäßen Vorrichtung, wobei Fig. 1a) beispielhaft ein flexibles Element in Form einer Blattfeder darstellt, Fig. 1b) ein beispielhaftes flexibles Element in Form einer gesickten Blattfeder, sowie Fig. 1c) die perspektivische Sicht einer gesickten ringförmigen Blattfeder.

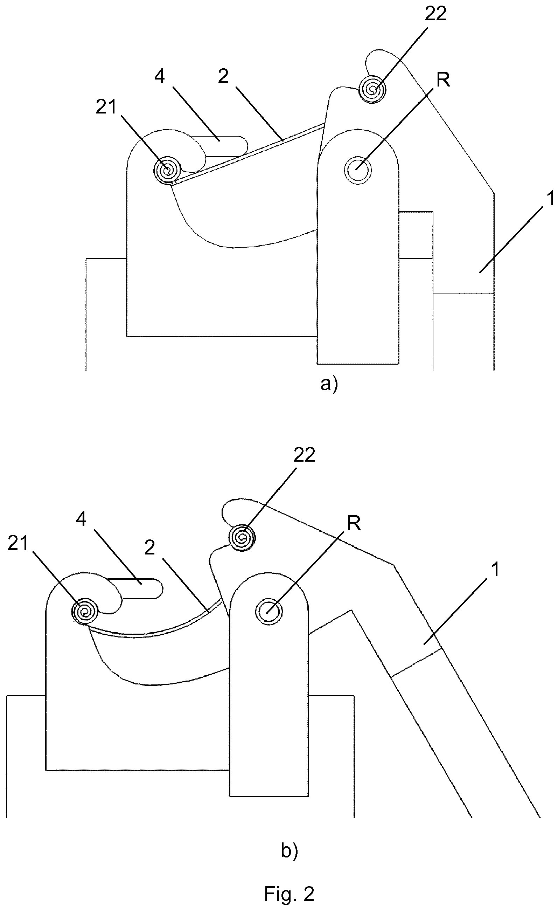

- Fig. 2: eine detaillierte Darstellung der Vorrichtung einer Steckdose mit der in Fig. 1a) dargestellten Blattfeder, wobei Fig. 2a) den Klappdeckel in geschlossener Endstellung darstellt und Fig. 2b) den Klappdeckel in einer teilweise geöffneten Stellung darstellt;

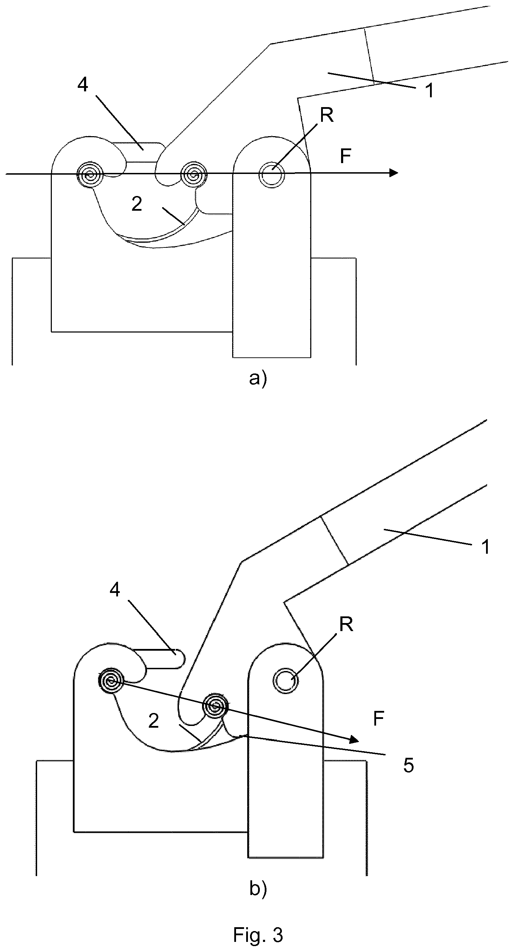

- Fig. 3: die Federkraft, die entlang der Federwirklinie des flexiblen Elements auf den Klappdeckel in geöffneter Endstellung wirken kann, wobei sich in Fig. 3a) die Federwirklinie der Rotationsachse des Klappdeckels annähert, so dass sich der Klappdeckel in offener Endstellung nicht bewegt, oder in Fig. 3b) die Federwirklinie mit der Rotationsachse des Klappdeckels überschneidet, so dass der Klappdeckel in offener Endstellung gehalten wird;

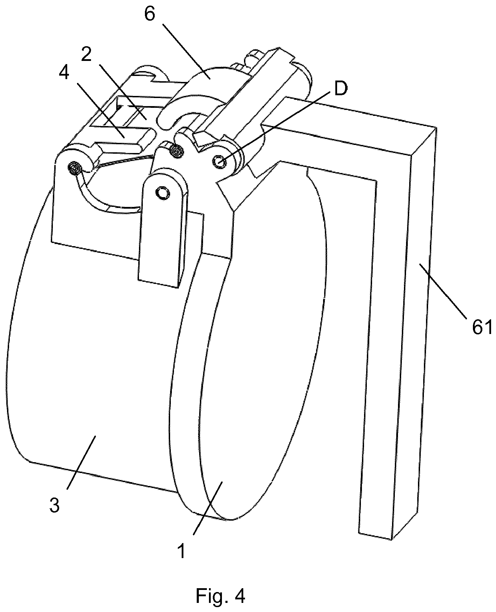

- Fig. 4: eine Übersicht über eine zweite Ausführungsform der erfindungsgemäßen Vorrichtung, welche ein Entriegelungselement aufweist;

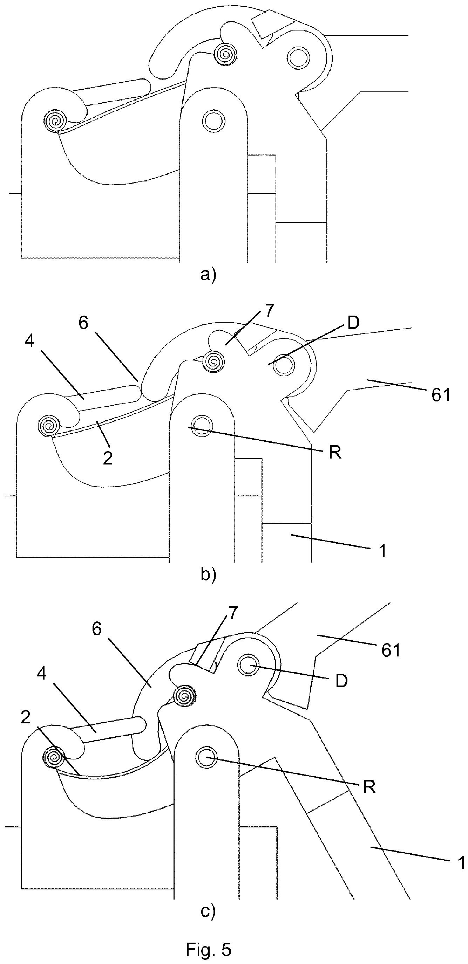

- Fig. 5: eine detaillierte Darstellung der Vorrichtung aus Fig. 4, wobei in Fig. 5a) der geschlossene und verriegelte Klappdeckel, in Fig. 5b) der geschlossene und nicht-verriegelte Klappdeckel und in Fig. 5c) der teilweise geöffnete Klappdeckel dargestellt ist;

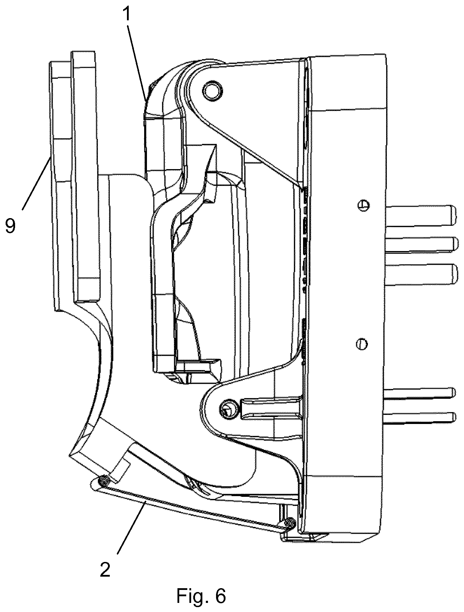

- Fig. 6: eine alternative Ausführungsform der erfindungsgemäßen Vorrichtung;

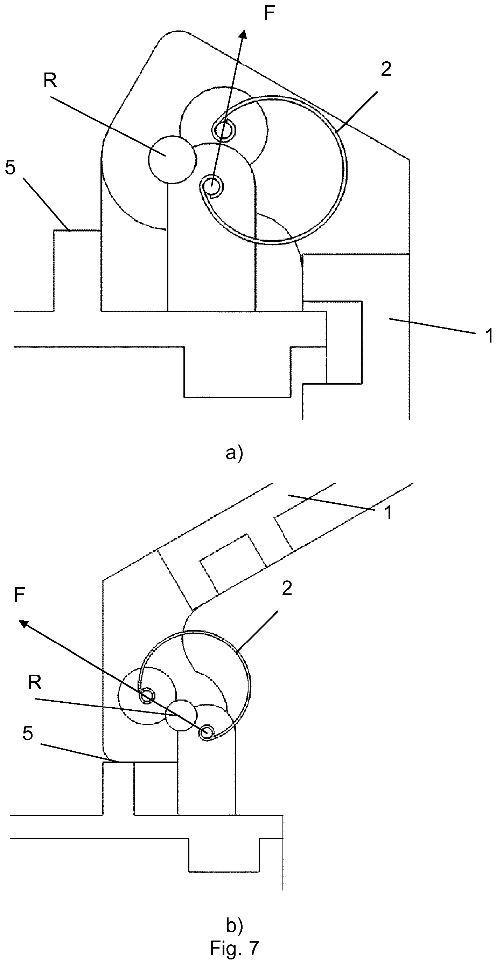

- Fig. 7: eine weitere alternative Ausführungsform, bei der die Federwirklinie und die Rotationsachse R des Klappdeckels im Wesentlichen auf einer Linie liegen und das Federelement als ringförmige Blattfeder ausgeführt ist. Fig. 7a) zeigt hierbei einen geschlossenen Klappdeckel, Fig. 7b) einen offenen Klappdeckel, welcher durch einen Anschlag begrenzt ist;

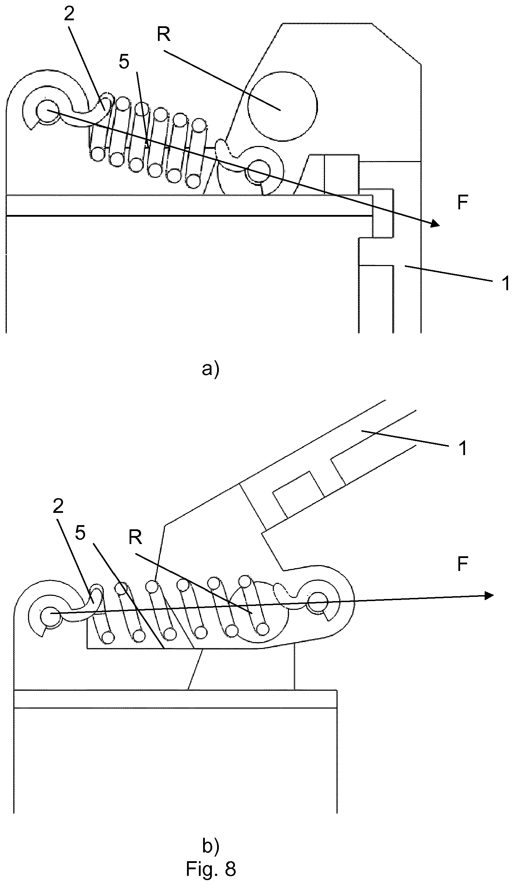

- Fig. 8: eine exemplarische Vorrichtung, nicht gemäss der Erfindung, bei der die Federwirklinie und die Rotationsachse R des Klappdeckels im Wesentlichen auf einer Linie liegen und das Federelement als Zugschraubenfeder ausgeführt ist. Fig. 8a) zeigt hierbei einen geschlossenen Klappdeckel, Fig. 8b) einen offenen Klappdeckel, welcher durch einen Anschlag begrenzt ist;

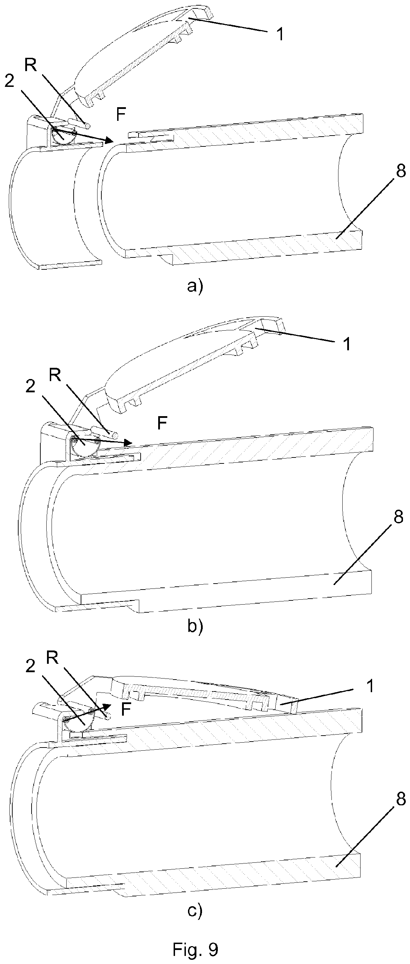

- Fig. 9: eine weitere Ausführungsform der erfindungsgemäßen Vorrichtung, bei der der Belastungszustand des flexiblen Elements durch Einsteckung eines weiteren Bauteils verändert wird, wobei Fig. 9a) den Zustand vor Einstecken des Bauteils, Fig. 9b) während des Einsteckens des Bauteils und Fig. 9c) nach dem Einstecken des Bauteils darstellt;

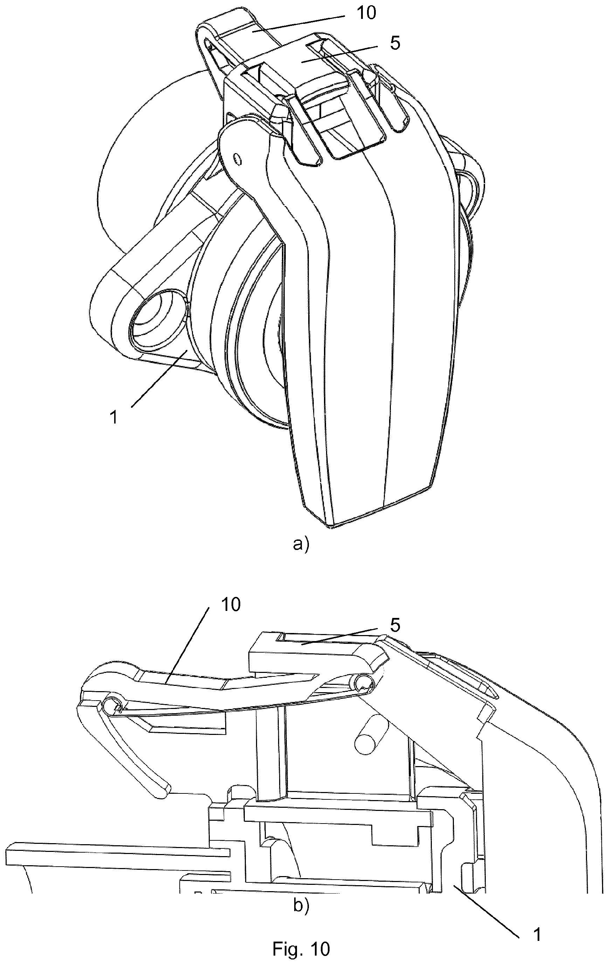

- Fig. 10: eine Ausführungsform der erfindungsgemäßen Vorrichtung, bei der das flexible Element mit einer Abdeckung zusätzlich gegen äußere Einflüsse geschützt ist, wobei Fig. 10a) eine perspektivische Ansicht dieser Ausführungsform zeigt und Fig. 10b) einen Längsschnitt der erfindungsgemäßen Vorrichtung darstellt.

Fig. 1 zeigt eine erste Ausführungsform der erfindungsgemäßen Vorrichtung, wobei in Fig. 1a) ein flexibles Element 2 in Form einer Blattfeder dargestellt ist. In diesem Ausführungsbeispiel ist die Blattfeder im nichtbelasteten und nicht-verformten Zustand dargestellt. Die Dicke des verwendeten Materials für die Blattfeder beträgt in diesem Ausführungsbeispiel 0,25 mm, wobei der Durchmesser der Federenden 21, 22 jeweils etwa 2 mm beträgt. In Fig. 1b) ist eine weitere Ausführungsform des flexiblen Elements 2 zu sehen, welche als Blattfeder mit einer Sickung ausgeführt ist. Diese beispielhafte Form der Blattfeder kann hier dazu verwendet werden, um das flexible Element 2 optimal hinsichtlich der Steifigkeit, dem Knickverhalten und der jeweiligen Belastung an die Bedürfnisse des Anwenders anzupassen. Die Durchmesser der Federenden 21, 22 sind hier beispielsweise so ausgeführt, dass diese auf entsprechende Haltebolzen steckbar zu montieren sind. In Fig. 1c) ist eine Ausführungsform gezeigt, welche eine ringförmige Blattfeder mit einer Sickung zeigt. Wie schon in Fig. 1b) bei einer Blattfeder gezeigt, kann auch bei der ringförmigen Blattfeder mithilfe der Sickung eine Steifigkeit und ein entsprechendes gewünschtes Knickverhalten des flexiblen Elements 2 entsprechend der Anwendung angepasst werden.
In Fig. 2 ist eine detaillierte Darstellung der Vorrichtung aus Fig. 1 dargestellt, wobei zwei verschiedene Belastungszustände der Blattfeder in Abhängigkeit von der Position des Klappdeckels dargestellt sind. Die Blattfeder ist mit dem einen Federende 21 im Gehäuse angebracht und mit dem weiteren Federende 22 am Klappdeckel befestigt, wobei beide Federenden drehgelagert sind. Aufgrund dieser Drehgelenke, wirkt die Federkraft entlang einer Linie, die beide Federenden verbindet. Die Rotation des Klappdeckels erfolgt um die Rotationsachse R. Fig. 2a) zeigt den Klappdeckel 1 in geschlossener Endstellung, wobei die Blattfeder 2 axial belastet wird. Der Anschlag 4 ist so gewählt, dass die Blattfeder nicht komplett gerade ist, sondern leicht verformt wird. Somit wird der Umschlagspunkt der Feder nicht erreicht. Die Federkraft muss nun eine Knickung der Blattfeder 2 bewirken, damit der Klappdeckel sich öffnen kann. In Fig. 2b) ist der Klappdeckel 1 in einer teilweise geöffneten Stellung dargestellt, wobei die Blattfeder 2 in Biegung, quer zur Federachse belastet wird, wenn der Klappdeckel entlang der Rotationsachse R geöffnet wird. Aufgrund des Anschlages am Gehäuse 4 verformt sich die Blattfeder 2 vom Anschlag 4 weg. Die Federkraft, die zwischen den zwei Drehgelenken 21, 22 gebildet wird, resultiert nun aus der Biegung der Blattfeder 2.

Fig. 3 illustriert die Federkraft, die entlang der Federwirklinie F des flexiblen Elements 2 auf den Klappdeckel 1 in geöffneter Endstellung wirken kann, wobei die Teilabbildungen Fig. 3a) und 3b) jeweils eine andere alternative Ausgestaltung der ersten Ausführungsform darstellen. In Fig. 3a) nähert sich die Federwirklinie F der Rotationsachse R des Klappdeckels 1 an. Das Drehmoment, durch welches das flexible Element 2 am Klappdeckel 1 angreift, ist hierbei nicht ausreichend, um den Reibungswiderstand gegen die Bewegung des Klappdeckels 1 zu überwinden. Somit bewegt sich der Klappdeckel 1 in offener Endstellung nicht. In Fig. 3b) überschneidet sich die Federwirklinie F mit der Rotationsachse R des Klappdeckels 1. Hierdurch wirkt das Drehmoment, durch welches das flexible Element 2 am Klappdeckel 1 angreift, in Öffnungsrichtung anstatt in Schließrichtung des Klappdeckels. Somit wird der Klappdeckel in offener Endstellung mittels der Kraft des flexiblen Elements 2 offen gehalten. Zusätzlich ist ein Anschlag 5 am Gehäuse vorgesehen, damit sich der Klappdeckel nicht weiter öffnen kann.
In Fig. 4 ist eine Übersicht über eine zweite Ausführungsform der erfindungsgemäßen Vorrichtung dargestellt, welche ein Entriegelungselement 6 aufweist. Das Entriegelungselement 6 wirkt hierbei direkt auf das flexible Element 2 und ermöglicht eine Bewegung des Klappdeckels 1 aus der geschlossenen Endstellung heraus. Im geschlossenen Zustand liegt der Klappdeckel 1 auf dem Gehäuse 3 auf und ein Anschlag 4 blockiert das flexible Element 2, damit sich dieses nicht in Richtung des Anschlages 4 verformen kann. Das Entriegelungselement 6 weist zur einfachen Betätigung einen Entriegelungshebel 61 auf, der ein einfaches Öffnen des Klappdeckels 1 aus der geschlossenen Endstellung heraus ermöglicht. Das Entriegelungselement 6 ist hierzu mit dem Klappdeckel 1 verbunden und durch ein Drehgelenk D beweglich gelagert. Durch Anheben des Entriegelungshebels 61 kann der Klappdeckel 1 geöffnet werden.

Fig.5 zeigt eine detaillierte Darstellung der zweiten Ausführungsform aus Fig. 4, wobei in den Teilabbildungen unterschiedliche Belastungszustände des flexiblen Elements in Abhängigkeit von der Position des Klappdeckels und des Entriegelungselements dargestellt sind. In Fig. 5a) ist der verriegelte Klappdeckel in geschlossener Endstellung dargestellt. In dieser geschlossenen Endstellung ist die Blattfeder 2 überspannt, so dass diese über den Umschlagspunkt heraus gerade gestellt ist. Bei Öffnung des Klappdeckels 1, ohne Entriegelung durch das Entriegelungselement, wirkt die Kraft derart auf die Blattfeder 2, dass diese in Richtung des Anschlages 4 verformt wird. Der Anschlag verhindert jedoch eine Knickung der Blattfeder 2, so dass der Klappdeckel nicht geöffnet werden kann. In Fig. 5b) ist der Zustand dargestellt, wenn der Entriegelungshebel 61 angehoben wurde. Das Entriegelungselement 6 wirkt hierbei auf die Blattfeder 2 und drückt diese nach unten über den Umschlagspunkt hinaus. Dies ermöglicht es, dass die Blattfeder in Abwärtsrichtung knicken kann, wo sie nicht durch einen Anschlag 4 aufgehalten wird. Ein weiterer Anschlag 7 zwischen dem Entriegelungselement 6 und dem Klappdeckel 1 überträgt die auf den Entriegelungshebel 61 wirkende Kraft auf den Klappdeckel 1, so dass dieser geöffnet werden kann, nachdem sich die Blattfeder 2 über den Umschlagspunkt verformt hat, was schließlich in Fig. 5c) dargestellt ist. Dadurch, dass der Entriegelungshebel 61 auf der Außenseite des Klappdeckels 1 angebracht ist, kann das Entriegelungselement 6 durch einen Nutzer zusammen mit dem Klappdeckel 1 geöffnet werden, so dass eine einhändige Bedienung möglich ist. Wenn eine Kraft lediglich auf den Klappdeckel 1 wirkt, kann diese den Klappdeckel 1 nicht aus der geschlossenen Endstellung heraus bewegen, da die Blattfeder 2 in Kombination mit dem Entriegelungselement 6 dies verhindert.

Fig. 6 zeigt eine weitere Ausführungsform der erfindungsgemäßen Vorrichtung. Bei dieser Ausführungsform ist ein Federende am Gehäuse befestigt und das andere Federende ist mit einem Verriegelungshebel 9 verbunden. Somit greift in dieser Ausführungsform die Blattfeder 2 über den Verriegelungshebel 9 an dem Klappdeckel 1 an. Da bei dieser Variante kein Anschlag am Gehäuse vorgesehen ist, ist die Blattfeder 2 in geschlossener Endstellung des Verriegelungshebels 9 axial belastet. Die Federkraft ist hierbei viel stärker als die Federkraft, die nach Knickung der Blattfeder ausgebildet wird. Somit kann diese Feder dazu eingesetzt werden, einen Verriegelungshebel 9 zu schließen.
Fig. 7 zeigt eine Ausführungsform der erfindungsgemäßen Vorrichtung mit einer Zugblattfeder als Federelement 2, wobei diese Ausführungsform über geschlossene Ösen verfügt, welche an beiden Federelementenden drehbar gelagert sind. Fig. 7a) stellt die erfindungsgemäße Vorrichtung in geschlossener Deckelstellung in einem Querschnitt dar, wobei die geometrische Anordnung der Rotationsachse R zur Federwirklinie F bei geschlossener Deckelstellung ersichtlich ist. Die drei maßgeblichen Punkte, also die zwei Federelementenden und die Rotationsachse R, weisen bei der geschlossenen Deckelstellung eine geometrische Anordnung zueinander auf, welche als Dreieck beschrieben werden kann. Wird nun, wie in Fig. 7b) dargestellt, der Deckel 1 der erfindungsgemäßen Vorrichtung von der geschlossenen Stellung in die offene Stellung gebracht, ändert sich diese geometrische Anordnung, wie in dem Ausführungsbeispiel gezeigt, von einem Dreieck dahingehend, dass alle drei Punkte, also die beiden Federelementenden und die Rotationsachse R, auf einer gemeinsamen Achse liegen. Das Ausführungsbeispiel zeigt nun in Fig. 7b) einen Anschlag 5, welcher die Endstellung des offenen Deckels 1 begrenzt. Dieser Anschlag 5 ist so gewählt, dass sich die geometrische Anordnung der drei Punkte zwar im Wesentlichen auf einer Achse befindet, aber tendenziell auch durch ein Dreieck beschrieben werden kann, bei dem ein Innenwinkel fast 180° hat. In dieser Stellung hält sich der Deckel 1 der erfindungsgemäßen Vorrichtung selbst und wird sich, bei einer entsprechenden Anpassung der Federkonstante des Federelements 2 an die Gewichtskraft des Deckels 1, bei minimaler Krafteinwirkung ,wie beispielsweise Antippen oder Vibration vom Starten eines Kfz, selbsttätig von der geöffneten Stellung in die geschlossene Stellung bewegen. Die dazu benötigte Federkraft wird ab jener Deckelstellung aufgebracht, bei der jene Position unterschritten wird, bei der die drei besagten Punkte auf einer Achse liegen.

Fig. 8 zeigt eine exemplarische Vorrichtung, welche sich einer Schraubenfeder als Federelement 2 bedient, wobei die beiden Federelementenden als offene Ösen ausgeführt sind. Diese Schraubenfeder ist in diesem Exemplar als Zugfeder ausgeführt. Fig. 8a) stellt die erfindungsgemäße Vorrichtung in geschlossener Deckelstellung in einem Querschnitt dar, wobei die geometrische Anordnung der Rotationsachse R zur Federwirklinie F bei geschlossener Deckelstellung ersichtlich ist. Die zwei Federelementenden und die Rotationsachse R zeigen auch hier eine geometrische Anordnung, die einem Dreieck nachempfunden ist. Fig. 8b) zeigt die Erfindung mit geöffnetem Deckel 1 und einer entsprechend der Funktion veränderten Lage der beiden Federelementenden und der Rotationsachse R zueinander. Hier wird aus der in Fig. 8a) gezeigten "Dreiecksbeziehung" der drei Punkte durch die Änderung der Lage des Deckels 1 im Wesentlichen eine gemeinsame Achse, welche auch hier ein selbsttätiges Halten der offenen Deckelstellung bewirkt, beschrieben. Verantwortlich für die so definierte geometrische Beziehung der drei Punkte zueinander ist abermals der Anschlag 4, welcher die Bewegung des Deckels 1 in eine Richtung begrenzt.
In Fig. 9 ist eine weitere alternative Ausführungsform der erfindungsgemäßen Vorrichtung dargestellt, bei der der Belastungszustand des flexiblen Elements durch Einsteckung eines weiteren Bauteils verändert wird und die verschiedenen Belastungszustände der Blattfeder in den einzelnen Teilabbildungen dargestellt sind. Bei diesem Ausführungsbeispiel handelt es sich bei dem weiteren Bauteil um einen Stecker, der in eine erfindungsgemäße Steckdose eingesteckt wird. Fig. 9a) zeigt den Zustand vor Einstecken des Steckers 8 mit dem Klappdeckel 1 in offener Endstellung. Die Blattfeder 2 ist hierbei in Biegung belastet und da die Federkraft, die entlang der Federwirklinie F wirkt, sich mit der Rotationsachse des Klappdeckels R überschneidet, wird der Klappdeckel in der offenen Endstellung gehalten. Fig. 9b) zeigt die Vorrichtung während des Einsteckens des Steckers, wobei der Stecker 8 auf die Blattfeder 2 wirkt und diese verformt, so dass sich die Federwirklinie F verschiebt. Der Zustand nach dem Einstecken des Steckers 8 ist in Fig. 9c) dargestellt. Hierbei hat sich durch die Einwirkung des Steckers 8 die Blattfeder 2 soweit verformt, dass die Federwirklinie F sich nicht mehr mit der Rotationsachse des Klappdeckels R überschneidet. Aus diesem Grund schließt sich der Klappdeckel 1 selbstständig, bis dieser auf dem Stecker 8 aufliegt.

In Fig. 10a) wird beispielhaft ein Schutz 10 für das flexible Element 2 dargestellt, welcher das flexible Element 2 vor äußeren Einflüssen wie Staub und Wasser schützen soll. Der dargestellte Schutz 10 des flexiblen Elements 2 schließt an der oberen Seite der beispielhaft gezeigten Vorrichtung, je nach Befestigung, beispielsweise mit dem Blech einer Anhängerkupplung ab. Durch die Befestigung an beispielsweise einer solchen Anhängerkupplung wären zwar die Steckverbindungen durch den Klappdeckel 1 geschützt, die wie auch immer geartete Feder würde aber aus baulichen Gründen freistehen und könnte beispielsweise mit einem Wasserstrahl einer Reinigungslanze entsprechend beschädigt werden. Um dies zu verhindern wird besagter Schutz 10 des flexiblen Elements 2, welcher hier beispielhaft dargestellt ist, so in die beanspruchte Vorrichtung integriert, dass diese mit beispielsweise einem Blech so abschließt, dass das flexible Element 2 vor Staub und Wasser geschützt ist. Wichtig ist hierbei, dass die Funktion der Vorrichtung nicht eingeschränkt wird, sondern lediglich ein Schutz der entsprechenden Bauteile gegeben ist. Überdies wird durch die vorteilhafte Ausgestaltung des dargestellten Schutzes 10 ein unerwünschtes öffnen des Klappdeckels 1 vermieden, da das flexible Element 2 beispielsweise vor einem Wasserstrahl geschützt ist, welcher das flexible Element 2 aus der aktuellen Stellung bringen könnte. Die in Fig. 10b) dargestellte Ausführungsform dieses Schutzes 2 zeigt, dass das flexible Element 2 mit diesem Schutz direkt vor äußeren Einflüssen geschützt ist.

### Bezugszeichenliste

- 1: Klappdeckel
- 11: Aussparung in Klappdeckel für Dichtungsgummi
- 2: flexibles Element
- 21,22: Enden des flexiblen Elements
- 3: Gehäuse
- 4: Anschlag für flexibles Element
- 5: Anschlag für Klappdeckel
- 6: Entriegelungselement
- 61: Entriegelungshebel
- 7: Anschlag für Entriegelungselement
- 8: Bauteil (Stecker), der in die Steckdose gesteckt wird
- 9: Verriegelungshebel
- 10: Schutz des flexiblen Elements
- F: Federwirklinie
- R: Rotationsachse des Klappdeckels
- D: Drehgelenk des Entriegelungselements

## Patentansprüche

1. Vorrichtung, aufweisend einen Klappdeckel (1), der aus einer geschlossenen Endstellung heraus um eine Rotationsachse (R) in eine geöffnete Endstellung schwenkbar ist, sowie ein flexibles Element (2), welches mit einer Kraft entlang einer Federwirklinie (F) an dem Klappdeckel (1) angreift, **dadurch gekennzeichnet,**
- **dass** das flexible Element (2) in mindestens einer Endstellung des Klappdeckels (1) axial belastet wird und in mindestens einer weiteren Position mit Querkräften in Biegung oder Dehnung belastet wird, und
- **dass** die Federwirklinie (F) in geöffneter Stellung des Klappdeckels (1) im Wesentlichen auf der Rotationsachse des Klappdeckels (R) liegt, so dass der Klappdeckel (1) in geöffneter Endstellung einen stabilen selbsthaltenden Zustand erreicht, oder
- **dass** sich die Federwirklinie (F) in geöffneter Stellung des Klappdeckels (1) mit der Rotationsachse des Klappdeckels (R) überschneidet, so dass der Klappdeckel (1) in geöffneter Endstellung einen stabilen selbsthaltenden Zustand erreicht, und
- **dass** die Vorrichtung einen Anschlag (4) für das flexible Element (2) aufweist und die Bewegung des flexiblen Elements (2) durch den Anschlag (4) so begrenzt ist, dass der Umschlagspunkt des flexiblen Elements (2) nicht erreicht wird und/oder einen Anschlag (5) für den Klappdeckel (1) aufweist, wobei die Bewegung des Klappdeckels (1) durch den Anschlag (5) so begrenzt ist, dass der Klappdeckel (1) sich nicht weiter als bis zur geöffneten Endstellung öffnen kann, und
- **dass** es sich bei dem flexiblen Element (2) um eine Blattfeder handelt, wobei mindestens ein Ende des Federelements (21, 22) mit einer drehbaren Lagerung versehen ist.

2. Vorrichtung nach Anspruch 1, **dadurch gekennzeichnet, dass** eine Knickung oder Dehnung des flexiblen Elements (2) erfolgt, damit der Klappdeckel (1) aus der geschlossenen Endstellung heraus bewegbar ist.

3. Vorrichtung nach einem der vorherigen Ansprüchen, **dadurch gekennzeichnet, dass** der Anschlag (4) als Lasche ausgebildet und/oder im Gehäuse (3) integriert ist.

4. Vorrichtung nach einem der vorherigen Ansprüchen, **dadurch gekennzeichnet, dass** das flexible Element (2) mit einer oder mehreren Sicken versehen ist.

5. Vorrichtung nach einem der vorherigen Ansprüchen, **dadurch gekennzeichnet, dass** ein zusätzliches Entriegelungselement (6) vorgesehen ist, wobei das Entriegelungselement an dem flexiblen Element (2) angreift, so dass dieses aus dem axial belasteten Zustand heraus biegbar ist.

6. Vorrichtung nach Anspruch 5, **dadurch gekennzeichnet, dass** das Entriegelungselement (6) einen Entriegelungshebel (61) aufweist und mittels eines Drehgelenks (D) mit dem Klappdeckel (1) und/oder dem Gehäuse (3) verbunden ist.

7. Vorrichtung nach einem der vorherigen Ansprüchen, **dadurch gekennzeichnet, dass** der Belastungszustand des flexiblen Elements (2) durch das Einstecken eines weiteren Bauteils (8) verändert wird, so dass der Klappdeckel (1) durch die Federkraft des flexiblen Elements (2) schließbar ist.

8. Vorrichtung nach einem der vorherigen Ansprüchen, **dadurch gekennzeichnet, dass** ein Teil des Klappdeckels (1) in geöffneter Endstellung ein weiteres Gehäuseteil (5) kontaktiert, so dass ein Reibungswiderstand in geöffneter Endstellung erzeugt wird oder der Klappdeckel (1) in die geöffnete Endstellung einrastbar ist.

9. Vorrichtung nach einem der vorherigen Ansprüchen, **dadurch gekennzeichnet, dass** das flexible Element (2) über einen Verriegelungshebel (9) an dem Klappdeckel (1) angreift und/oder der Verriegelungshebel (9) ein eingestecktes weiteres Bauteil (8) mit einer Kraft beaufschlagt.

10. Vorrichtung nach einem der vorherigen Ansprüchen, **dadurch gekennzeichnet, dass** das flexible Element (2) einen mechanischen Schutz (10) gegen äußere Einflüsse aufweist.

11. Steckdose, die durch einen Klappdeckel (1) abgedeckt wird, **dadurch gekennzeichnet, dass** die Steckdose eine Vorrichtung nach einem der vorherigen Ansprüche aufweist.

## Claims

1. Device, comprising a hinged cover (1) which is pivotable about an axis of rotation (R) out of a closed final position in an open final position, and a flexible element (2) which acts upon the hinged cover (1) with a force along a spring line of action (F),
**characterized**
- **in that** the flexible element (2) is axially loaded in at least one final position of the hinged cover (1) and is loaded with transverse forces in bending or tension in at least one further position, and
- **in that** in the open position of the hinged cover (1), the spring line of action (F) lies substantially on the axis of rotation (R) of the hinged cover (1) such that the hinged cover (1) reaches a stable self-supporting state in the open final position, or
- **in that** in the open position of the hinged cover (1), the spring line of action (F) crosses over the axis of rotation (R) of the hinged cover (1) such that the hinged cover (1) reaches a stable self-supporting state in the open final position, and
- **in that** the device comprises a blocking surface (4) for the flexible element (2) and that the movement of the flexible element (2) is limited by the blocking surface (4) such that the transition point of the flexible element (2) is not exceeded, and/or that the device comprises a blocking surface (5) for the hinged cover (1) with the blocking surface (5) limiting the movement of the hinged cover (1) such that the hinged cover (1) can not exceed the final open position, and
- **in that** the flexible element (2) is a leaf spring wherein at least one end of the spring element (21, 22) is rotationally mounted.

2. Device according to claim 1, **characterized in that** a buckling or extension of the flexible element (2) is required for the hinged cover (1) to pivot out of the closed final position.

3. Device according to one of the preceding claims, **characterized in that** the blocking surface (4) is configured as a flange and/or is integrated in the housing (3).

4. Device according to one of the preceding claims, **characterized in that** the flexible element (2) includes one or several corrugations.

5. Device according to one of the preceding claims, **characterized in that** it comprises an additional unlocking element (6) wherein the unlocking element (6) acts upon the flexible element (2) such that it can be bent out of an axially loaded state.

6. Device according to claim 5, **characterized in that** the unlocking element (6) comprises an unlocking lever (61) and is connected by a pivot joint (D) to the hinged cover (1) and/or the housing (3).

7. Device according to one of the preceding claims, **characterized in that** the loading state of the flexible element (2) is modified by inserting another component (8) such that the hinged cover (1) is closed by the spring force of the flexible element (2).

8. Device according to one of the preceding claims, **characterized in that** a part of the hinged cover (1) contacts another part of the housing (5) in the open final position such that a frictional resistance is generated in the open final position or that the hinged cover (1) can be locked in the open final position.

9. Device according to one of the preceding claims, **characterized in that** the flexible element (2) acts on the hinged cover (1) over a locking lever (9) and/or that the locking lever (9) acts with a force on another inserted component (8).

10. Device according to one of the preceding claims, **characterized in that** the flexible element (2) comprises a mechanical protection (10) against external influences.

11. Socket covered by a hinged cover (1), **characterized in that** the socket comprises a device according to one of the preceding claims.

## Revendications

1. Dispositif présentant un couvercle rabattable (1) pouvant pivoter autour d'un axe de rotation (R) hors d'une position finale fermée dans une position finale ouverte ainsi qu'un élément flexible (2) qui est en prise avec une force le long d'une ligne active élastique (F) avec le couvercle rabattable (1),
**caractérisé en ce**
- **que** l'élément flexible (2) est sollicité axialement dans au moins une position finale du couvercle rabattable (1) et est sollicité en flexion ou allongement avec des forces transversales dans au moins une autre position, et
- **que**, dans la position ouverte du couvercle rabattable (1), la ligne active élastique (F) se situe sensiblement sur l'axe de rotation (R) du couvercle rabattable de sorte que dans la position finale ouverte, le couvercle rabattable (1) atteint un état stable à auto-maintien, ou
- **que** dans la position ouverte du couvercle rabattable (1), la ligne active élastique (F) se recoupe avec l'axe de rotation (R) du couvercle rabattable de sorte que dans la position finale ouverte, le couvercle rabattable (1) atteint un état stable à auto-maintien, et
- **que** le dispositif présente une butée (4) pour l'élément flexible (2) et le mouvement de l'élément flexible (2) est limité par la butée (4) de sorte que le point de retournement de l'élément flexible (2) n'est pas atteint et/ou présente une butée (5) pour le couvercle rabattable (1), dans lequel le mouvement du couvercle rabattable (1) est limité par la butée (5) de sorte que le couvercle rabattable (1) ne peut pas s'ouvrir plus loin que jusqu'à la position finale ouverte, et
- **qu'**en ce qui concerne l'élément flexible (2), il s'agit d'un ressort à lame, dans lequel au moins une extrémité de l'élément de ressort (21, 22) est dotée d'un logement rotatif.

2. Dispositif selon la revendication 1, **caractérisé en ce qu'**il y a un pliage ou un allongement de l'élément flexible (2) pour pouvoir faire bouger le couvercle rabattable (1) hors de la position finale fermée.

3. Dispositif selon l'une des revendications précédentes, **caractérisé en ce que** la butée (4) est réalisée en tant que languette et/ou est intégrée dans le boîtier (3).

4. Dispositif selon l'une des revendications précédentes, **caractérisé en ce que** l'élément flexible (2) est doté d'une ou plusieurs moulures.

5. Dispositif selon l'une des revendications précédentes, **caractérisé en ce qu'**est prévu un élément de déverrouillage (6) supplémentaire, dans lequel l'élément de déverrouillage est en prise avec l'élément flexible (2) de sorte que celui-ci peut être plié hors de l'état de sollicitation axiale.

6. Dispositif selon la revendication 5, **caractérisé en ce que** l'élément de déverrouillage (6) présente un levier de déverrouillage (61) et est relié au moyen d'une articulation à charnière (D) au couvercle rabattable (1) et/ou au boîtier (3).

7. Dispositif selon l'une des revendications précédentes, **caractérisé en ce que** l'état de sollicitation de l'élément flexible (2) est modifié par l'insertion d'un autre composant (8) de sorte que le couvercle rabattable (1) peut être fermé par la force élastique de l'élément flexible (2).

8. Dispositif selon l'une des revendications précédentes, **caractérisé en ce que**, dans la position finale ouverte, une partie du couvercle rabattable (1) entre en contact avec une autre partie de boîtier (5) de sorte qu'une résistance de frottement est générée dans la position finale ouverte ou que le couvercle rabattable (1) peut être encliqueté dans la position finale ouverte.

9. Dispositif selon l'une des revendications précédentes, **caractérisé en ce que** l'élément flexible (2) est en prise via un levier de verrouillage (9) avec le couvercle rabattable (1), et/ou le levier de verrouillage (9) exerce une force sur un autre composant (8) inséré.

10. Dispositif selon l'une des revendications précédentes, **caractérisé en ce que** l'élément flexible (2) présente une protection mécanique (10) contre les influences extérieures.

11. Prise de courant, laquelle est recouverte par un couvercle rabattable (1), **caractérisée en ce que** la prise de courant présente un dispositif selon l'une des revendications précédentes.
